# EUROPEAN PATENT SPECIFICATION

(11) **EP 4 071 873 B1**
(45) Date of publication and mention of the grant of the patent: **19.07.2023**
(21) Application number: 22164042.8
(22) Date of filing: 24.03.2022
(51) Int. Cl.: H01M 10/0525, H01M 50/403, H01M 50/443, H01M 50/446, H01M 50/457

(54) **SEPARATOR AND LITHIUM BATTERY INCLUDING SEPARATOR**
SEPARATOR UND LITHIUMBATTERIE MIT SEPARATOR
SÉPARATEUR ET BATTERIE AU LITHIUM COMPRENANT UN SÉPARATEUR

(30) Priority: 26.03.2021 KR 20210039489
(43) Date of publication of application: 12.10.2022
(73) Proprietor: Samsung SDI Co., Ltd., Yongin-si, Gyeonggi-do 17084 (KR)
(72) Inventor: Choi, Hyeonsun, 17084 Yongin-si, Gyeonggi-do (KR); Seo, Dongwan, 17084 Yongin-si, Gyeonggi-do (KR); Kim, Jinyoung, 17084 Yongin-si, Gyeonggi-do (KR)
(74) Representative: Gulde & Partner

(56) References cited:
- KR-A- 20160 041 496
- US-A1- 2019 131 604
- US-A1- 2020 388 808

## Description

### BACKGROUND

### 1. Field

One or more embodiments relate to a separator and a lithium battery including the separator.

### 2. Description of the Related Art

In order to meet the miniaturization and high performance of various devices, miniaturization and weight reduction of lithium batteries are becoming more important. In addition, discharge capacity, energy density, and cycle characteristics of lithium batteries are becoming important for application to fields such as electric vehicles. In order to meet the use, a lithium battery having a large discharge capacity per unit volume, high energy density, and excellent lifespan characteristics are required.

In a lithium battery, a separator is disposed between the positive electrode and the negative electrode to prevent a short circuit (or reduce a likelihood or occurrence of a short circuit). An electrode assembly including a positive electrode, a negative electrode, and a separator disposed between the positive and negative electrodes is wound to have a jelly roll shape, and in the electrode assembly, a jelly roll is hot-pressed to improve adhesion between the positive electrode/negative electrode and the separator.

An olefin-based polymer is widely used as a separator for lithium batteries. Although olefin-based polymers have excellent flexibility, olefin-based polymers have low strength when immersed in an electrolyte, and short circuit of a battery may occur due to rapid thermal contraction at high temperatures of 100 °C or higher. To this end, for example, a separator added with a shutdown function using polyethylene wax on a porous olefin-based polymer member was presented. However, in the separator coated with polyethylene wax, the polyethylene wax melts at high temperature and may not maintain the coating layer, such that the contact surface of the electrode plate increases, and thermal runaway increases.

Therefore, a separator capable of improving battery stability at high temperatures is required.

### SUMMARY

The present invention provides a separator for lithium batteries as defined in claim 1. One or more embodiments include a separator that may maintain a coating layer of a network structure and secure battery stability.

One or more embodiments include a lithium battery including the separator.

Additional aspects will be set forth in part in the description which follows and, in part, will be apparent from the description, or may be learned by practice of the presented embodiments of the disclosure.

The separator includes: a porous substrate; a first coating layer disposed on a surface of the porous substrate, the first coating layer including an organic particle having a melting point (Tₘ) in a range of 100 °C to 130 °C, a particle-type boehmite, a needle-shaped ceramic particle, and a first binder;
a first adhesive layer disposed on another surface of the porous substrate, the first adhesive layer having a glass transition temperature (Tg) of 50 °C or higher, and including a particle-type second binder; and
a second adhesive layer disposed on the first coating layer,
the second adhesive layer having a glass transition temperature (Tg) of 50 °C or higher, and including a particle-type second binder.

According to another aspect of the present invention, there is provided as defined in claim 15.

The lithium battery includes: a positive electrode; a negative electrode; and the separator between the positive electrode and negative electrode.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 illustrates a schematic view of an embodiment of a lithium battery;
FIG. 2 illustrates a schematic view of an embodiment of a laminate structure and a coating form of a separator;
FIG. 3 illustrates a schematic view of another embodiment of a laminate structure and a coating form of a separator;
FIG. 4 shows a change in ion conductivity of a separator according to a content of a needle-shaped ceramic particle in a coating layer of separators prepared in Examples 1 to 5 and Comparative Examples 1 and 2;
FIG. 5 is a scanning electron microscope (SEM) image of the separator prepared in Example 1 before leaving at a high temperature;
FIG. 6 is an SEM image of the separator prepared in Example 1 after leaving at a high temperature; and
FIG. 7 is an SEM image of the separator prepared in Comparative Example 1 after leaving at a high temperature.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a separator and a lithium battery including the separator according to an embodiment will be described in detail.

A separator for a lithium battery includes: a porous substrate; a first coating layer disposed on a surface of the porous substrate, the first coating layer including an organic particle having a melting point (Tₘ) in a range of 100 °C to 130 °C, a particle-type boehmite, a needle-shaped ceramic particle, and a first binder; a first adhesive layer disposed on another surface of the porous substrate, the first adhesive layer having a glass transition temperature (Tg) of 50 °C or higher, and including g a particle-type second binder; and a second adhesive layer disposed on the first coating layer, the second adhesive layer having a glass transition temperature (Tg) of 50 °C or higher, and including a particle-type second binder. The first binder may have a melting point higher than the melting point (Tₘ) of the organic particle. In particular, the first binder may have a melting point of 30 °C or higher than a melting point of the organic particle.

Melting points and glass transition temperatures are measured using differential scanning calorimetry (DSC), especially using a method specified in ISO 11357-3:2018.

The particle-type boehmite includes a spherical or a non-spherical shape.

The needle-shaped ceramic particle may be at least one selected from alumina (Al₂O₃), boehmite, BaSO₄, MgO, Mg(OH)₂, clay, SiO₂, TiO₂, ZnO, CaO, attapulgite, and 10SiO₂-2Al₂O₃-Fe₂O₃-2MgO. Here, attapulgite is an aluminum magnesium silicate as a mineral belonging to the monoclinic (orthorhombic) system.

As the separator includes a coating layer including, on a surface of a porous substrate, an organic particle having a melting point (Tₘ) in a range of 100 °C to 130 °C and a first binder having a melting point higher than the melting point (Tₘ) of the organic particle, in particular a melting point of 30 °C or higher than a melting point of the organic particle, even when the organic particle of the coating layer is left at a high temperature, due to a network structure of the first binder having a higher melting point, the shape of the coating layer may be maintained. Thus, upon occurrence of shutdown, a rapid increase in temperature and calorific value may be delayed. Thus, a lithium battery having an improved stability at a high temperature may be provided.

In the case of a coating separator in the related art, in order to solve the problem of short circuit of batteries due to rapid thermal contraction at high temperature, for example, a method of adding a shutdown function using polyethylene wax on the porous substrate has been proposed. However, the coated polyethylene wax is melted at high temperature and may not maintain the coating layer, and thus, the contact surface of the separator may be increased, thereby increasing thermal runaway.

To this end, a separator is provided in which a coating layer is formed, on a surface of the porous substrate, by mixing the organic particle, the first binder having a melting point higher than the melting point (Tₘ) of the organic particle, the particle-type boehmite, and the needle-shaped ceramic particle.

The first binder may be coated with the organic particle, the particle-type boehmite, and the needle-shaped ceramic particle, or the first binder may embed the organic particle, the particle-type boehmite, and the needle-shaped ceramic particle therein.

The first coating layer contains the particle-type boehmite and the needle-shaped ceramic particle to improve electrolyte impregnation property, durability, and safety of the separator.

The needle-shaped ceramic particle may be, for example, at least one selected from alumina (Al₂O₃), boehmite, BaSO₄, MgO, Mg(OH)₂, clay, SiO₂, TiO₂, ZnO , CaO, attapulgite, and 10SiO₂-2Al₂O₃-Fe₂O₃-2MgO.

In one embodiment, the needle-shaped ceramic particle may be attapulgite, for example, a compound represented by Formula 3MgO -1.5Al₂O₃-8SiO₂-9H₂O.

The needle-shaped ceramic particle may be, for example, ATTAGEL 40 commercially available in the art. ATTAGEL 40 is a fine-milled attapulgite clay that provides excellent thickening and thixotropic performance in high quality water-containing systems such as latex. Another type of ATTAGEL brand clay product is ATTAGEL 30 or ATTAGEL 50.

An average size of the needle-shaped ceramic particle may be in a range of 1 µm to 20 µm, 1.1 µm to 18 µm, 3 µm to 16 µm, or 5 µm to 15 µm, and an aspect ratio of the needle-shaped ceramic particle may be in a range of 2 to 100, 10 to 95, 15 to 90, 20 to 85, 30 to 80, or 30 to 65. Here, an average size refers to an average length. The average size and the aspect ratio may be identified by scanning electron microscope (SEM). As an SEM analysis device, an ultra-high-resolution field emission scanning electron microscope (S-4700 manufactured by Hitachi High-Technologies Co., Ltd.) is used. Images are photographed using the SEM analysis device, and image analysis is performed by randomly selecting 50 particles to determine the average length.

Also, similarly to aspect ratio, 50 particles are selected from the SEM image to perform image analysis and to determine the average value. Specifically, 50 particle images of which the entire image at 100x magnification may be observed are selected in order from the largest, and each of the images is observed at 1000x magnification. and find the average value of aspect ratio. From the printed images, average values of a minor axis length, a major axis length, and an aspect ratio of the needle-shaped ceramic particle may be obtained. The aspect ratio is determined as the ratio of the major axis length to the minor axis length (aspect ratio = major axis length/short axis length).

When the needle-shaped ceramic particles have the average size and the aspect ratio within these ranges, a separator with excellent ion conductivity, excellent air permeability characteristics, and excellent shutdown function may be manufactured.

A density of the needle-shaped ceramic particle according to one or more embodiments may be, for example, in a range of 0.2 g/cm² to 0.5 g/cm², 0.25 g/cm² to 0.45 g/cm², 0.3 g/cm² to 0.4 g/cm², or 0.35 g/cm² to 0.37 g/cm².

The particle-type boehmite may have excellent endothermic properties and have hydroxyl groups. Thus, the particle-type boehmite may be controlled to have high hydrophilicity and high specific surface area. The particle-type boehmite may contain a primary particle, a secondary particle that is an aggregate of primary particles, or a combination thereof.

The particle-type boehmite may be, specifically, spherical, plate-shaped, cubic, or amorphous. The specific surface area may be 3 m²/g or greater, 10 m²/g or greater, 30 m²/g or greater, or 30 m²/g to 50 m²/g. The density may be in a range of 0.1 g/cm³ to 30 g/cm³. The density may be calculated based on "Test method of ceramic materials for electrical insulation" (JIS C 2141) according to JIS.

The average particle size of the particle-type boehmite indicates the average particle diameter when the particle-type boehmite is spherical or the major axis length when the particle-type boehmite is non-spherical. The average particle size of the particle-type boehmite may be in a range of 0.1 µm to 1.0 µm, 0.2 µm to 0.9 µm, 0.3 µm to 0.8 µm, or 0.4 µm to 0.6 µm.

In this specification, the average particle diameter means D50 by volume. The average particle diameter may be measured by using, for example, a measuring device, of a laser diffraction method or dynamic light scattering method. The average particle diameter is a valued measured by using, for example, a laser scattering particle size distribution meter (e.g., Horiba LA-920 and is a median particle diameter (D50) corresponding to 50 % in an accumulated particle size distribution curve from a small particle.

A content of the needle-shaped ceramic particle may be in a range of 1 part to 30 parts by weight, 2 parts to 30 parts by weight, 3 parts to 30 parts by weight, or 5 parts to 30 parts by weight, based on 100 parts by weight of a total weight of the particle-type boehmite and the needle-shaped ceramic particle. When the content of needle-shaped ceramic particles is within any of these ranges, the electrolyte impregnation property is improved, and the ionic conductivity is increased.

A total content of the particle-type boehmite and the needle-shaped ceramic particle may be in a range of 20 parts to 50 parts by weight, 20 parts to 40 parts by weight, or 25 parts to 40 parts by weight, based on 100 parts by weight of the inorganic particles. Here, the term "inorganic particles" refers to a mixture of the particle-type boehmite and the needle-shaped ceramic particle.

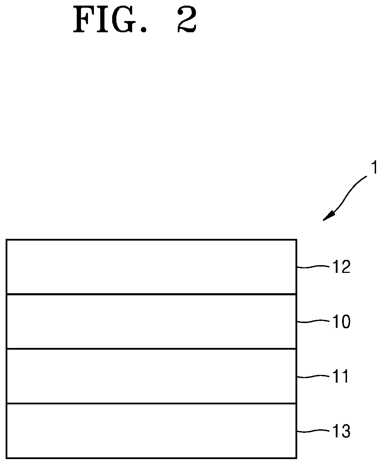

FIG. 2 illustrates a schematic view of an embodiment of a laminate structure and a coating form of a separator.

A first coating layer 11, including an organic particle having a melting point (Tₘ) in a range of 100 °C to 130 °C, a particle-type boehmite, a needle-shaped ceramic particle, and a first binder, may be formed on a porous substrate 10, and a second adhesive layer 13 including a particle-type second binder having a glass transition temperature (Tg) of 50 °C or higher, may be formed on the first coating layer 11. The first adhesive layer 12 containing a particle-type second binder having a glass transition temperature (Tg) of 50 °C or higher may be disposed on another surface of the porous substrate 10.

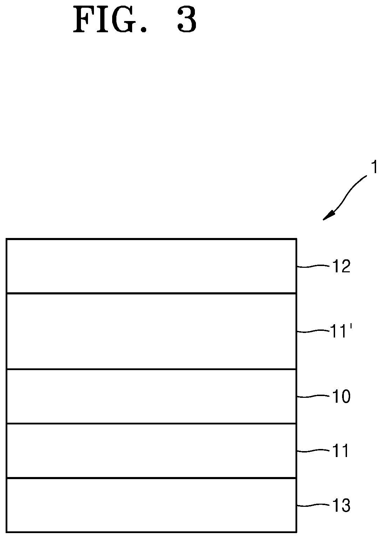

As shown in FIG. 3, the second coating layer 11', including an organic particle having a melting point (Tₘ) in a range of 100 °C to 130 °C, a particle-type boehmite, a needle-shaped ceramic particle, and a second binder, may be further included between the porous substrate 10 and the first adhesive layer 12. The organic particle may be, for example, PE wax.

When the separator is exposed to high temperatures, organic particles dissolve and permeate into the porous substrate to block pores of the porous substrate, thereby suppressing movement of electric current and improving thermal stability. In addition, the needle-shaped ceramic particle may act as a filler together with the particle-type boehmite.

Due to the large specific surface area of the needle-shaped ceramic particle and the particle-type boehmite, electrolyte impregnation may be improved, thus increasing ionic conductivity. The particle-type boehmite may improve heat resistance and durability of the separator by imparting appropriate strength to the coating layer.

When the separator is exposed to high temperatures, organic particles dissolve or melt and permeate into the porous substrate, which may cause shutdown blocking pores of the porous substrate. Even when the organic particles are dissolved or melted, the first binder with a high melting point in the coating layer may maintain a matrix form of a network structure with voids remaining where the organic particles are dissolved or melted and vanished, thereby preventing collapse of the coating layer. Therefore, in the separator according to an embodiment, the coating layer may be maintained when shutdown occurs at high temperatures by suppressing an increase in a contact surface of an electrode plate and delaying a rapid increase in temperature and calorific value. Accordingly, a lithium battery may have improved stability at a high temperature.

The first coating layer 11 may be a shutdown layer that may shutdown and may be coated on a surface or both sides of the porous substrate 10.

The melting point (Tₘ) of the organic particle included in the first coating layer 11 may be in a range of 100 °C to 130 °C, for example, 110 °C to 125 °C. When the melting point of the organic particle is less than 100 °C, unexpected heat and changes in external environment may cause the organic particle to melt and block pores of the separator, thereby reducing output and usability of a battery. Thus, battery performance may be adversely affected. In addition, when the melting point of the organic particle exceeds 130 °C, the separator may melt down, and thus, it may be difficult to exert a shutdown effect by the organic particle. The organic particle may have, for example, a melting point in a range similar to the melting point of the porous substrate.

The organic particles coated on the porous substrate with a melting point (Tₘ) in a range of 100 °C to 130 °C are melted after being exposed to a high temperature, e.g., a temperature of 120 °C, pores of the porous substrate may be blocked, and movement of electric current may be suppressed, thereby improve stability of a lithium battery.

According to an embodiment, the organic particle may have at least one shape selected from a spherical shape, a particle-type shape, a plate-like shape, and a flake-like shape, and for example, the organic particle may be in a spherical shape. The organic particle may be, for example, at least one selected from polyethylene (PE) wax, polypropylene (PP) wax, polystyrene (PS), polyvinylidene fluoride (PVDF), polymethyl methacrylate (PMMA), an acrylate-based compound, polyacrylonitrile (PAN), and an azodicarbonamide-based compound. For example, the organic particle may be polyethylene (PE) wax.

The first binder included in the first coating layer may have a melting point 30 °C higher than the melting point of the organic particle. For example, the first binder may have a melting point higher than the melting point of organic particles by 30 °C or more, 40 °C or more, 50 °C or more, 60 °C or more, 70 °C or more, 80 °C or more, 90 °C or more, or 100 °C or more. For example, the melting point of the first binder may be in a range of 160 °C to 180 °C, 165 °C to 175 °C, for example, 170 °C. By having such a high melting point within any of these ranges, even when the separator is exposed to high temperatures, the first binder having high heat resistance may maintain the matrix form of the network structure.

The first binder may be highly resistant to heat and include, for example, at least one of a sulfonate-based compound, an acrylamide-based compound, a (meth)acryl-based compound, and an acrylonitrile-based compound or a copolymer thereof. The first binder may include, for example, a sulfonate-based compound, an acrylamide-based compound, and an acrylonitrile-based compound or may be a copolymer thereof, for example a block copolymer.

The first binder may include a (meth)acryl-based copolymer including: a first repeating unit derived from (meth)acrylamide; a repeating unit derived from at least one selected from methacrylic acid and (meth)acrylate; a second repeating unit including at least one of (meth)acrylamidosulfonic acid and salts thereof.

The first repeating unit may be included in a range of 55 mol% to 95 mol%, 60 mol% to 90 mol% or 65 mol% to 85 mol%, based on 100 mol% of the (meth)acryl-based copolymer. The second repeating unit may be included in a range of 5 mol% to 45 mol%, 10 mol% to 40 mol%, or 15 mol% to 35 mol%, based on 100 mol% of the (meth)acryl-based copolymer. The repeating unit derived from the (meth)acrylamidosulfonic acid and a salt thereof in the second repeating unit may be 10 mol% or less, in a range of 0.01 to 10 mol%, or 0.01 to 5 mol%, based on 100 mol% of the (meth)acryl-based copolymer. When a content of the repeating unit is within any of these ranges, heat resistance and binding force of the separator may be further improved.

The first repeating unit derived from the (meth)acrylamide may include an -NH₂ functional group in the repeating unit. The -NH₂ functional group may improve binding force between a porous substrate and an electrode and, for example, form a hydrogen bond between an -OH functional group of the needle-shaped ceramic particle and the particle-type boehmite. The needle-shaped ceramic particle and the particle-type boehmite were used as the inorganic particle. Thus, inorganic particles in the coating layer may be firmly fixed, and accordingly, heat resistance of the separator may be further improved.

The repeating unit derived from at least one selected from the methacrylic acid and (meth)acrylate may serve to fix the inorganic particle on a porous substrate and provide binding force between the coating layer and the porous substrate and the electrode, thereby improving heat resistance and air permeability of the separator. The repeating unit derived from at least one selected from the methacrylic acid and (meth)acrylate may include a carboxyl functional group (-C(=O)O-) in the repeating unit, and the carboxyl functional group may contribute to improvement in dispersibility of the coating slurry.

In addition, the repeating unit derived from the (meth)acrylamidosulfonic acid and a salt thereof includes a bulky functional group, thereby reducing mobility of the copolymer including the (meth)acrylamidosulfonic acid and a salt thereof, thereby enhancing heat resistance of the separator.

The first repeating unit derived from the (meth)acrylamide may be, for example, represented by Formula 1: 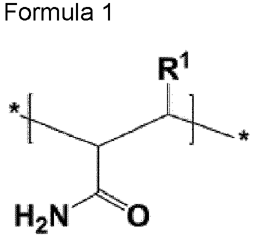 wherein, in Formula 1, R¹ may be hydrogen or a C₁ to C₆ alkyl group.

The repeating unit derived from the methacrylic acid and (meth)acrylate may be represented by, for example, any one of Formula 2, Formula 3, and a combination thereof: 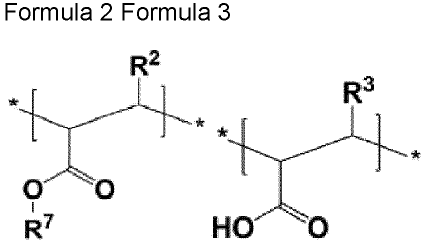 wherein, in Formulae 2 and 3, R² and R³ may each independently be hydrogen or a C₁ to C₆ alkyl group, and R⁷ may be a substituted or unsubstituted C₁ to C₂₀ alkyl group.

The repeating unit derived from (meth)acrylate may be derived from methacrylic acid alkyl ester, methacrylic acid perfluoro alkyl ester, and (meth)acrylate having a functional group in a side chain, for example, methacrylic acid alkyl ester. In addition, the number of carbons in the alkyl group or perfluoro alkyl group bonded to a non-carbonyl oxygen atom of the methacrylic acid alkyl ester or methacrylic acid perfluoro alkyl ester may be, specifically, 1 to 20, more specifically, 1 to 10, and for example, 1 to 5.

Examples of the methacrylic acid alkyl ester having 1 to 5 carbons in the alkyl group or perfluoro alkyl group bonded to a non-carbonyl oxygen atom may include: acrylic acid alkyl ester such as acrylic acid methyl ester, acrylic acid ethyl ester, acrylic acid n-propyl ester, acrylic acid isopropyl ester, acrylate n-butyl ester, and acrylic acid t-butyl ester; acrylic acid-2-(perfluoroalkyl)ethyl ester such as acrylic acid-2-(perfluorobutyl) ethyl ester and acrylic acid-2-(perfluoropentyl)ethyl ester; methacrylic acid alkyl ester such as methacrylic acid methyl ester, methacrylic acid ethyl ester, methacrylic acid n-propyl ester, methacrylic acid isopropyl ester, methacrylic acid n-butyl ester, and methacrylic acid t-butyl ester; and methacrylic acid-2-(perfluoroalkyl) ethyl ester such as methacrylic acid-2-(perfluorobutyl)ethyl ester, methacrylic acid-2-(perfluoropentyl)ethyl ester , and methacrylic acid-2-(perfluoroalkyl) ethyl ester.

Examples of the methacrylic acid alkyl ester may include: acrylic acid alkyl ester having 6 to 18 carbons in an alkyl group binding to a non-carbonyl oxygen atom, such as acrylic acid n-hexyl ester, acrylic acid-2-ethylhexyl ester, acrylic acid nonyl ester, acrylic acid lauryl ester, acrylic acid stearyl ester, acrylic acid cyclohexyl ester, and acrylic acid isobonyl ester; methacrylic acid alkyl ester having 6 to 18 carbons in alkyl group binding to a non-carbonyl oxygen atom, such as methacrylic acid n-hexyl ester, methacrylic acid-2-ethylhexyl ester, methacrylic acid octyl ester, methacrylic acid isodecyl ester, methacrylic acid lauryl ester, methacrylic acid tridecyl ester, methacrylic acid stearyl ester, and methacrylic acid cyclohexyl ester; acrylic acid-2-(perfluoroalkyl) ethyl ester having 6 to 18 carbons in perfluoro alkyl group binding to a non-carbonyl oxygen atom, such as acrylic acid-2-(perfluorohexyl)ethyl ester, acrylic acid-2-(perfluorooctyl) ethyl ester, acrylic acid-2-(perfluorononyl) ethyl ester, acrylic acid-2-(perfluorodecyl) ethyl ester, acrylic acid-2-(perfluorododecyl) ethyl ester, acrylic acid-2-(perfluorotetradecyl) ethyl ester, and acrylic acid-2-(perfluorohexadecyl) ethyl ester; and methacrylic acid-2-(perfluoroalkyl) ethyl ester having 6 to 18 carbons in perfluoro alkyl group binding to a non-carbonyl oxygen atom, such as methacrylic acid-2-(perfluorohexyl) ethyl ester, methacrylic acid-2-(perfluorooctyl) ethyl ester, methacrylic acid-2-(perfluorononyl) ethyl ester, methacrylic acid-2-(perfluorodecyl) ethyl ester, methacrylic acid-2-(perfluorododecyl) ethyl ester, methacrylic acid-2-(perfluorotetradecyl) ethyl ester, and methacrylic acid-2-(perfluorohexadecyl) ethyl ester.

For example, the repeating unit derived from the (metha)acrylatic acid or (meth)acrylate may respectively include a repeating unit represented by Formula 2 and a repeating unit represented by Formula 3. When the repeating unit includes both the repeating unit represented by Formula 2 and the repeating unit represented by Formula 3, a molar ratio of the repeating unit represented by Formula 2 to the repeating unit represented by Formula 3 may be in a range of 10:1 to 1:1, 6:1 to 1:1, or 3:1 to 1:1.

The repeating unit derived from the (meth)acrylamidosulfonic acid and a salt thereof may be derived from (meth)acrylamidosulfonic acid or (meth)acrylamidosulfonate, and the (meth)acrylamidosulfonate may be a conjugate base of (meth)acrylamidosulfonic acid, a (meth)acrylamidosulfonic acid salt, or a derivative thereof. The repeating unit derived from (meth)acrylamidosulfonic acid or (meth)acrylamidosulfonate may be, for example, represented by one of Formula 4, Formula 5, Formula 6, and a combination thereof.

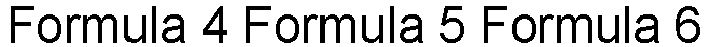

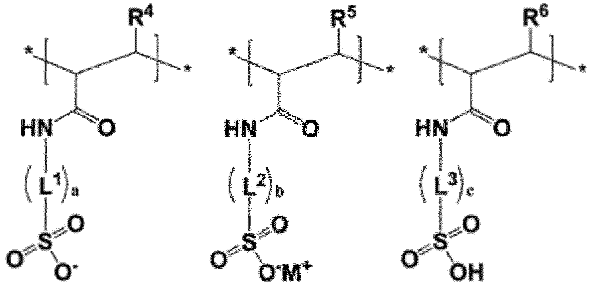

Wherein, in Formulae 4 to 6, R⁴, R⁵, and R⁶ may each independently be hydrogen or C₁ to C₆ alkyl group, L¹, L², and L³ may each independently be a substituted or unsubstituted C₁ to C₁₀ alkylene group, a substituted or unsubstituted C₃ to C₂₀ cycloalkylene group, a substituted or unsubstituted C₆ to C₂₀ arylene group, or a substituted or unsubstituted C₃ to C₂₀ heterocyclic group, a, b, and c may each independently be an integer from 0 to 2, M may be an alkali metal, and the alkali metal may be, for example, lithium, sodium, potassium, rubidium, or cesium.

In Formulae 4 to 6, L¹, L², and L³ may each independently be a substituted or unsubstituted C₁ to C₁₀ alkylene group, and a, b, and c may each be 1.

The repeating unit derived from the (meth)acrylamidosulfonic acid and a salt thereof may include each of or at least two of the repeating unit represented by Formula 4, the repeating unit represented by Formula 5, and the repeating unit represented by Formula 6. For example, the repeating unit derived from the (meth)acrylamidosulfonic acid and a salt thereof may include the repeating unit represented by Formula 5. For example, the repeating unit derived from the (meth)acrylamidosulfonic acid and a salt thereof may include the repeating unit represented by Formula 5 and the repeating unit represented by Formula 6.

When the repeating unit derived from the (meth)acrylamidosulfonic acid and a salt thereof includes both the repeating unit represented by Formula 5 and the repeating unit represented by Formula 6, a molar ratio of the repeating unit represented by Formula 5 to the repeating unit represented by Formula 6 may be in a range of 10:1 to 1:2, 5:1 to 1:1, or3:1 to 1:1.

The sulfonate in the repeating unit derived from the (meth)acrylamidosulfonic acid and a salt thereof may be a functional group derived from, for example, vinyl sulfonic acid, allyl sulfonic acid, styrene sulfonic acid, anethole sulfonic acid, acrylamidoalkane sulfonic acid, sulfoalkyl (meth)acrylate, or a salt thereof. Here, alkane may be C₁ to C₂₀ alkane, C₁ to C₁₀ alkane, or C₁ to C₆ alkane, and alkyl may be C₁ to C₂₀ alkyl, C₁ to C₁₀ alkyl, or C₁ to C₆ alkyl. The salt means a salt including the foregoing sulfonate and appropriate ions. The ion may be, for example, an alkali metal ion, and the salt may be a sulfonate alkali metal salt. The acrylamidoalkane sulfonic acid may be, for example, 2-acrylamido-2-methylpropane sulfonate, and the sulfoalkyl (meth)acrylate may be, for example, 2-sulfoethyl (meth)acrylate, or 3-sulfopropyl (meth)acrylate.

Example of the (meth)acryl-based copolymer may be represented by Formula 7: 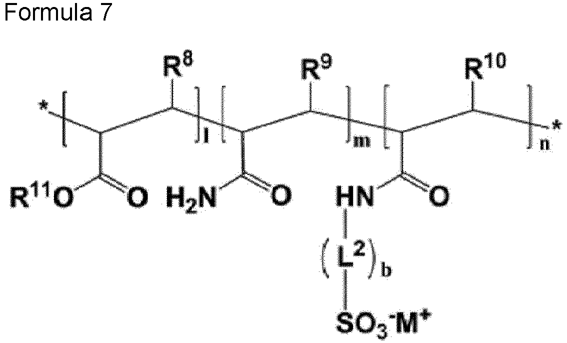 wherein, in Formula 7, R⁸ to R¹⁰ may each independently be hydrogen or a methyl group, R¹¹ may be hydrogen or a C₁ to C₆ alkyl group, L² may be a substituted or unsubstituted C₁ to C₁₀ alkylene group, a substituted or unsubstituted C₃ to C₂₀ cycloalkylene group, a substituted or unsubstituted C₆ to C₂₀ arylene group, or a substituted or unsubstituted C₃ to C₂₀ heterocyclic group, b may be an integer from 0 to 2, M may be an alkali metal such as lithium, sodium, potassium, rubidium, or cesium, and I, m, and n may each indicate a molar ratio of each unit.

In Formula 7, l+m+n=1. In some embodiments, 0.05≤(l+n)≤0.45 and 0.55≤m≤0.95, for example, 0≤l≤0.4 and 0≤n≤0.1, or for example, 0.9≤m≤0.95, 0≤l≤0.05, and 0≤n≤0.05.

For example, in Formula 7, L² may be a substituted or unsubstituted C₁ to C₁₀ alkylene group, and b may be 1.

The repeating unit substituted with alkali metal (M⁺) in the (meth)acryl-based copolymer may be in a range of 50 mol% to 100 mol%, for example, 60 to 90 mol%, or for example, 70 to 90 mol%, based on 100 mol% of the total amount of (meth)acrylamidosulfonic acid repeating unit. When any of these ranges is satisfied, the (meth)acryl-based copolymer and a separator including the (meth)acryl-based copolymer may have excellent binding force, heat resistance, and oxidation resistance.

The (meth)acryl-based copolymer may further include other units other than the foregoing units. For example, the (meth)acryl-based copolymer may further include a unit derived from alkyl(meth)acrylate, a unit derived from diene, a unit derived from styrene-based group, a unit containing an ester group, a unit containing a carbonate group, or a combination thereof.

The (meth)acryl-based copolymer may be in various forms, such as an alternating polymer in which units are alternately distributed, a random polymer in which units are randomly distributed, or a graft polymer in which some structural units are grafted.

The weight average molecular weight of the (meth)acryl-based copolymer may be in a range of 350,000 to 970,000 daltons, 450,000 to 970,000daltons or 450,000 to 700,000 daltons. When the weight average molecular weight of the (meth)acryl-based copolymer satisfies any of these ranges, the (meth)acryl-based copolymer and a separator including the (meth)acryl-based copolymer may exhibit excellent binding force, heat resistance, and air permeability. The weight average molecular weight may be an average molecular weight in terms of polystyrene measured using gel permeation chromatography.

The (meth)acryl-based copolymer may be prepared by various known methods such as emulsion polymerization, suspension polymerization, bulk polymerization, solution polymerization, or bulk polymerization.

The first binder may be at least one selected from poly(acrylic acid-co-acrylamide-co-2-acrylamido-2-methylpropane sulfonic acid) sodium salt, poly(acrylic acid acryl amide acryl amido sulfonic acid), and a salt thereof.

For example, the first binder is poly(acrylic acid-co-acrylamide-co-2-acrylamido-2-methylpropane sulfonic acid)sodium salt.

A content of the first binder may be in a range of 1 part to 15 parts by weight, 3 parts to 12 parts by weight, 3 parts to 10 parts by weight, or 3 parts to 8 parts by weight, based on 100 parts by weight of the total weight of the organic particle, the particle-type boehmite, the needle-shaped ceramic particle, and the first binder. The first binder may effectively coat a surface of an organic particle in any of these ranges to form a network-structured matrix surrounding the organic particle.

The first coating layer may include a needle-shaped ceramic particle. As the first coating layer includes a needle-shaped ceramic particle, possibility of a short circuit between the positive electrode and the negative electrode may be lowered, stability of a battery is improved, reduction of the separator area at high temperature may be further suppressed, a relatively high porosity may be secured, and properties upon evaluation penetration of a lithium battery may be improved.

A content of the organic particle in the first coating layer may be in a range of 50 wt% to 80 wt%, 55 wt% to 80 wt%, or 60 wt% to 80 wt%, based on the total weight of the organic particle, the particle-type boehmite, the needle-shaped ceramic particle, and first binder. When a content of the organic particle is within any of these ranges, a battery may have improved stability in a high temperature.

According to an embodiment, a thickness of the first coating layer may be in a range of 0.1 µm to 5 µm, 0.5 µm to 5 µm, 1 µm to 5 µm, or 3 µm to 5 µm. When a thickness of the first coating layer is within any of these ranges, the separator may provide improved shutdown function and air permeability and reduce a thickness of the electrode assembly, thereby maximizing battery capacity per volume.

According to an embodiment, the particle-type second binder may be an aqueous binder that may be present in particle form after coating and drying, and for example, the aqueous binder may include an acrylate or styrene group.

The aqueous binder has a glass transition temperature (Tg) of 50 °C or higher.

As the particle-type second binder, a binder having a commonly used binding force may be used. For example, the particle-type second binder may include at least one selected from acryl-based resin, polyvinylidene fluoride, polyvinylidene fluoride-hexafluoropropylene copolymer, polyvinylidene fluoride-trichloroethylene copolymer, polyvinylidene fluoride-chlorotrifluoroethylene copolymer, polymethyl methacrylate, polyacrylonitrile, polyvinyl pyrrolidone, polyvinyl acetate, ethylene vinyl acetate copolymer, polyethylene oxide, cellulose acetate, cellulose acetate butylate, cellulose acetate propionate, cyanoethylpullulan, cyanoethyl polyvinyl alcohol, cyanoethyl cellulose, cyanoethyl sucrose, pullulan, carboxylmethyl cellulose, acrylonitrile styrene butadiene copolymer, and polyimide, but embodiments are not limited thereto. The acryl-based resin may be, for example, poly(2-ethylhexylacrylate).

The particle-type second binder in an embodiment may include a particle-type acryl-based resin, particle-type polyvinylidene fluoride, or a combination thereof. Here, the acryl-based resin may be, for example, poly(2-ethylhexylacrylate).

An average diameter of the particle-type second binder may be in a range of 100 nm to 800 nm, 150 nm to 800 nm, or 200 nm to 800 nm. When the average diameter of the particle-type second binder is within any of these ranges, a separator having excellent binding force may be manufactured.

In some embodiments, the average particle diameter of the particle-type second binder in the first adhesive layer and the second adhesive layer may be in a range of 100 nm to 500 nm, for example, a particle-type acryl-based resin having an average particle diameter in a range of 400 nm to 500 nm or a particle-type polyvinylidene fluoride having an average particle diameter in a range of 100 nm to 300 nm.

The first adhesive layer and the second adhesive layer may each include a fluorine-based binder. The fluorine-based binder is a binder of which some or all of hydrogens bound to carbon is substituted with fluorine. For example, the fluorine-based binder may be a polymer including a repeating unit derived from at least one monomer selected from vinylylidene fluoride monomer, tetrafluoroethylene monomer, and hexafluoropropylene. The fluorine-based binder may be, for example, a fluorine-based homopolymer or a fluorine-based copolymer.

A thickness of the first adhesive layer and the second adhesive layer may each be in a range of 0.1 µm to 5 µm, 0.1 µm to 3 µm, 0.3 µm to 2 µm, or 0.5 µm to 1 µm. When the thickness of each of the first adhesive layer and the second adhesive layer is within any of these ranges, the first adhesive layer and the second adhesive layer may effectively provide a binding force between the coating layer and the electrode plate.

The porous substrate included in the separator may be a porous membrane containing polyolefin. Polyolefin may have an excellent short circuit prevention effect and may improve battery stability by a shutdown effect. For example, the porous substrate may be a film including a resin such as polyolefin such as polyethylene, polypropylene, polybutene, or polyvinyl chloride, and a mixture or copolymer thereof. For example, a porous film including a polyolefin-based resin, a porous film woven with a polyolefin-based fiber, nonwoven fabric including polyolefin, an aggregate of insulating material particles, or the like may be used as the porous substrate. For example, a porous film containing polyolefin may have excellent applicability of a binder solution for preparing the coating layer formed on the porous substrate, and capacity per unit volume may be increased by increasing a ratio of active material in a battery by thinning the thickness of a film of the separator.

The polyolefin used as a material of the porous substrate may be, for example, a homopolymer such as polyethylene or polypropylene, a copolymer, or a mixture thereof. Polyethylene may be low-density, medium-density, or high-density polyethylene, and in terms of mechanical strength, polyethylene may be high-density polyethylene. In addition, polyethylene may be a mixture of at least two types of polyethylene for imparting flexibility. The polymerization catalyst used for preparing polyethylene is not particularly limited, and a Ziegler-Natta catalyst, a Phillips catalyst, or a metallocene catalyst may be used. In view of reconciling mechanical strength and high permeability, the weight average molecular weight of polyethylene may be in a range of 100,000 to 12,000,000, or for example, 200,000 to 3,000,000. Polypropylene may be a homopolymer, a random copolymer, or a block copolymer, and polypropylene may be used alone or in a mixture of at least two thereof. In addition, the polymerization catalyst is not particularly limited, and a Ziegler-Natta catalyst or a metallocene catalyst may be used. In addition, stereoregularity is not particularly limited, and polypropylene stereoregularity of may be isotactic, syndiotactic, or atactic. Inexpensive isotactic polypropylene may be used. In addition, while not adversely affecting one or more embodiments, additives such as polyolefins other than polyethylene and polypropylene and antioxidants may be added to the polyolefin.

The porous substrate included in the separator may include, for example, polyolefin such as polyethylene, polypropylene, or the like, and a multilayer film of at least two layers may be used. For example, a mixed multilayer film such as a polyethylene/polypropylene two-layer separator, a polyethylene/polypropylene/polyethylene three-layer separator, or a polypropylene/polyethylene/polypropylene three-layer separator may be used, but embodiments are not limited thereto. Any suitable material and composition available in the art used in a porous substrate may be used. The porous substrate included in the separator may include, for example, a diene-based polymer prepared by polymerizing a monomer composition including a diene-based monomer. The diene-based monomer may be a conjugated diene-based monomer or a non-conjugated diene-based monomer. For example, the diene-based monomer may include at least one selected from the group consisting of 1,3-butadiene, isoprene, 2-chloro-1,3-butadiene, 2,3-dimethyl-1,3-butadiene, 2-ethyl-1,3-butadiene, 1,3-pentadiene, chloroprene, vinyl pyridine, vinyl norbornene, dicyclopentadiene, and 1,4-hexadiene, but embodiments are not limited thereto. Any suitable diene-based monomer available in the art may be used.

A thickness of the porous substrate included in the separator may be in a range of 1 µm to 100 µm, 1 µm to 30 µm, 5 µm to 20 µm, 5 µm to 15 µm, or 5 µm to 10 µm. When a thickness of the porous substrate is less than 1 µm, it may be difficult to maintain mechanical properties of the separator, and when a thickness of the porous substrate exceeds 100 µm, internal resistance of a lithium battery may increase. The porosity of the porous substrate included in the separator may be in a range of 5 % to 95 %. When the porosity is less than 5 %, internal resistance of a lithium battery may increase, and when the porosity is more than 95 %, it may be difficult to maintain mechanical properties of the porous substrate. A pore size of the porous substrate in the separator may be in a range of 0.01 µm to 50 µm. For example, a pore size of the porous substrate in the separator may be in a range of 0.01 µm to 20 µm. For example, a pore size of the porous substrate in the separator may be in a range of 0.01 µm to 10 µm. When the pore size is less 0.01 µm, internal resistance of a lithium battery may increase, and when the pore size is more than 50 µm, it may be difficult to maintain mechanical properties of the porous substrate. Any suitable method of preparing a separator available in the art may be used.

For example, a composition for forming a first coating layer may be coated on a surface of a porous substrate and dried to form a first coating layer, and a composition for forming a first adhesive layer may be coated on another surface of the porous substrate and dried to form a first adhesive layer. Subsequently, after coating a composition for forming a second adhesive layer on the first coating layer, the composition may be dried to form a second adhesive layer to thereby manufacture a separator.

The method of coating each of the composition for forming the first coating layer, the composition for forming the first adhesive layer, and the composition for forming the second adhesive layer is not particularly limited. Any suitable method available in the art may be used. For example, each layer may be formed by a method such as printing, roller coating, blade coating, dipping coating, spray coating, or the like.

A lithium battery according to an embodiment may include a positive electrode, a negative electrode, and a separator between the positive electrode and the negative electrode. According to an embodiment, the lithium battery may include an electrode assembly including a positive electrode, a negative electrode, and a separator between the positive electrode and the negative electrode, wherein the electrode assembly is wound into a jelly roll shape. As a lithium battery includes the separator described above, stability of the lithium battery may be secured by maintaining the coating layer of the network structure at a high temperature.

The lithium battery may be, for example, manufactured as follows.

A negative active material, a conductive agent, a binder, and a solvent are mixed to prepare a negative active material composition. In one or more embodiments, the negative active material composition may be directly coated on a metallic current collector to prepare a negative electrode plate. In one or more embodiments, the negative active material composition may be cast on a separate support to form a negative active material film, which may then be separated from the support and laminated on a metallic current collector to prepare a negative electrode plate. The negative electrode is not limited to the examples described above, and may have various other shapes.

The negative active material may be, for example, a carbonaceous material, a non-carbonaceous material, or a combination thereof.

Examples of the carbonaceous material may include crystalline carbon, amorphous carbon, and mixtures thereof. Examples of the crystalline carbon may include graphite, such as natural graphite or artificial graphite that are non-shaped, plate, flake, spherical, or fibrous form. Examples of the amorphous carbon may include soft carbon (carbon sintered at low temperatures), hard carbon, meso-phase pitch carbides, and sintered cokes.

For example, the negative active material may include at least one selected from the group consisting of a metal that is alloyable with lithium, an alloy of the metal that is alloyable with lithium, and an oxide of the metal that is alloyable with lithium.

Examples of the metal alloyable with lithium include silicon (Si), tin (Sn), aluminum (Al), germanium (Ge), lead (Pb), bismuth (Bi), antimony (Sb), a Si-Y alloy (wherein Y is an alkali metal, an alkaline earth metal, Groups 13 to 16 elements, a transition metal, a rare earth element, or a combination thereof, and Y is not Si), and a Sn-Y alloy (wherein Y is an alkali metal, an alkaline earth-metal, Groups 13 to 16 elements, a transition metal, a rare earth element, or a combination thereof, and Y is not Sn). Y may be magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), germanium (Ge), phosphorus (P), arsenic (As), antimony (Sb), bismuth (Bi), sulfur (S), selenium (Se), tellurium (Te), polonium (Po), or a combination thereof.

For example, the transition metal oxide may be a lithium titanium oxide, a vanadium oxide, or a lithium vanadium oxide.

Examples of the non-transition metal oxide include SnO₂ and SiOₓ (where 0<x<2).

The negative active material may be at least one selected from the group consisting of Si, Sn, Pb, Ge, Al, SiOₓ, wherein 0<x≤2, SnOy, wherein 0<y≤2, Li4Ti5O12, TiO₂, LiTiO₃, and Li₂Ti₃O₇. But embodiments are not limited thereto. Any suitable non-carbonaceous negative active material available in the art may be used.

In addition, a complex of the non-carbonaceous negative active material and the carbonaceous material may be used, and a carbonaceous negative active material may be additionally included in addition to the non-carbonaceous material.

Examples of the carbonaceous material may include crystalline carbon, amorphous carbon, and mixtures thereof. Examples of the crystalline carbon may include graphite, such as natural graphite or artificial graphite that are non-shaped, plate, flake, spherical, or fibrous form. Examples of the amorphous carbon may include soft carbon (carbon sintered at low temperatures), hard carbon, meso-phase pitch carbides, and sintered cokes.

The conductive agent may be acetylene black, Ketjen black, natural graphite, artificial graphite, carbon black, acetylene black, Ketjen black, carbon fiber, and metal powder and metal fiber of, e.g., copper, nickel, aluminum, or silver. In some embodiments, at least one conductive material such as a polyphenylene derivative may be used alone or in combination, but embodiments are not limited thereto. Any suitable conductive agent available in the art may be used. Any of the above-described crystalline carbonaceous materials may be added as a conductive agent.

Examples of the binder may include a vinylidene fluoride/hexafluoropropylene copolymer, polyvinylidene fluoride (PVDF), polyacrylonitrile, polymethylmethacrylate, polytetrafluoroethylene, and mixtures thereof, and a styrene-butadiene rubber polymer may be used as a binder, but embodiments are not limited thereto. Any suitable material available as a binder in the art may be further used.

Examples of the solvent include N-methyl-pyrrolidone, acetone, and water, but embodiments are not limited thereto. Any suitable material available as a solvent in the art may be used.

The amounts of the negative active material, the conductive agent, the binder, and the solvent may be the same levels generally used in the art for lithium batteries. At least one of the conductive agent, the binder, and the solvent may be omitted according to the use and the structure of the lithium battery.

A positive active material, a conductive agent, a binder, and a solvent are mixed to prepare a positive active material composition. In one or more embodiments, the positive active material composition may directly be coated on a metallic current collector and then dried to prepare a positive electrode plate. In one or more embodiments, the positive active material composition may be cast on a separate support to form a positive active material film, which may then be separated from the support and laminated on a metallic current collector to prepare a positive electrode plate.

The positive active material may further include at least one selected from lithium cobalt oxide, lithium nickel cobalt manganese oxide, lithium nickel cobalt aluminum oxide, lithium iron phosphorous oxide, and lithium manganese oxide, but embodiments are not limited thereto. Any suitable positive active material available in the art may be used.

The positive active material may be, for example, a compound represented by one of the following formulae: LiₐA_{1-b}B'_{b}D₂, wherein 0.90≤a≤1.8 and 0≤b≤0.5; LiaE1-bB'bO2-cDc, wherein 0.90≤a≤1.8, 0≤b≤0.5, and 0≤c≤0.05; LiE2-bB'bO4-cDc, wherein 0≤b≤0.5 and 0≤c≤0.05; LiaNi1-b-cCobB'cDa, wherein 0.90≤a≤1.8, 0≤b≤0.5, 0≤c≤0.05, and 0<α≤2; LiaNi1-b-cCobB'cO2-αF'α, wherein 0.90≤a≤1.8, 0≤b≤0.5, 0≤c≤0.05, and 0<α≤2; LiaNi1-b-cCobB'cO2-αF'2, wherein 0.90≤a≤1.8, 0≤b≤0.5, 0≤c≤0.05, and 0<α≤2; LiaNi1-b-cMnbB'cDα, wherein 0.90≤a≤1.8, 0≤b≤0.5, 0≤c≤0.05, and 0<α≤2; LiaNi1-b-cMnbB'cO2-αF'α, wherein 0.90≤a≤1.8, 0≤b≤0.5, 0≤c≤0.05, and 0<α≤2; LiaNi1-b-cMnbB'cO2-αF'2, wherein 0.90≤a≤1.8, 0≤b≤0.5, 0≤c≤0.05, and 0<α≤2; LiaNibEcGdO2, wherein 0.90≤a≤1.8, 0≤b≤0.9, and 0≤c≤0.5, 0.001≤d≤0.1; LiaNibCocMndGeO2, wherein 0.90≤a≤1.8, 0≤b≤0.9, 0≤c≤0.5, 0≤d ≤0.5, and 0.001≤e≤0.1; LiaNiGbO2, wherein 0.90≤a≤1.8 and 0.001≤b≤0.1; LiaCoGbO2, wherein 0.90≤a≤1.8 and 0.001≤b≤0.1; LiaMnGbO2, wherein 0.90≤a≤1.8 and 0.001≤b≤0.1; LiaMn2GbO4, wherein 0.90≤a≤1.8 and 0.001≤b≤0.1; QO2; QS2; LiQS2; V2O5; LiV2O5; LiIO2; LiNiVO4; Li(3-f)J2(PO4)3(0≤f≤2); Li(3-f)Fe2(PO4)3, wherein 0≤f≤2; and LiFePO4:
In the foregoing formulae, A may be selected from nickel (Ni), cobalt (Co), manganese (Mn), and a combination thereof; B' may be selected from aluminum (Al), Ni, Co, Mn, chromium (Cr), iron (Fe), magnesium (Mg), strontium (Sr), vanadium (V), a rare-earth element, and a combination thereof; D may be selected from oxygen (O), fluorine (F), sulfur (S), phosphorus (P), and a combination thereof; E may be selected from Co, Mn, and a combination thereof; F' may be selected from F, S, P, and a combination thereof; G may be selected from Al, Cr, Mn, Fe, Mg, lanthanum (La), cerium (Ce), Sr, V, and a combination thereof; Q may be selected from titanium (Ti), molybdenum (Mo), Mn, and a combination thereof; I may be selected from Cr, V, Fe, scandium (Sc), yttrium (Y), and a combination thereof; and J may be selected from V, Cr, Mn, Co, Ni, copper (Cu), and a combination thereof.

The compounds listed above as positive active materials may have a surface coating layer (hereinafter, also referred to as "coating layer"). Alternatively, a mixture of a compound without a coating layer and a compound having a coating layer, the compounds being selected from the compounds listed above, may be used. In one or more embodiments, the coating layer may include at least one compound of a coating element selected from the group consisting of oxide, hydroxide, oxyhydroxide, oxycarbonate, and hydroxycarbonate of the coating element. In one or more embodiments, the compounds for the coating layer may be amorphous or crystalline. In one or more embodiments, the coating element for the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. In one or more embodiments, the coating layer may be formed using any suitable method that does not adversely affect the physical properties of the positive active material when a compound of the coating element is used. For example, the coating layer may be formed using a spray coating method or a dipping method. The coating method may be well understood by one of ordinary skill in the art, and thus a detailed description thereof will be omitted.

For example, LiNiO₂, LiCoO₂, LiMnₓO₂ₓ (wherein x=1 or 2), LiNi₁ₓMnₓO₂ (wherein 0<x<1), LiNi_{1-x-y}CoₓMn_{y}O₂ (wherein 0≤x≤0.5 and 0≤y≤0.5), LiFeO₂, V₂O₅, TiS, or MoS may be used.

In one or more embodiments, the conductive agent, the binder, and the solvent used for the positive active material composition may be the same as those used for the negative active material composition. A plasticizer may further be added to the positive active material composition and/or the negative active material composition to form pores inside the electrode plates.

The amounts of the positive active material, the conductive agent, the binder, and the solvent may be in ranges that are commonly used in lithium batteries. At least one of the conductive agent, the binder, and the solvent may be omitted according to the use and the structure of the lithium battery.

The binder used in preparation of the positive electrode may be identical to a coating composition included in the coating layer of the separator.

Next, a separator may be disposed between the positive electrode and the negative electrode.

The separator may be separately prepared and disposed between the positive electrode and the negative electrode.

Next, an electrolyte is prepared.

The electrolyte may be a liquid or gel electrolyte.

For example, the electrolyte may be an organic electrolytic solution. In some embodiments, the electrolyte may be a solid electrolyte. For example, the solid electrolyte may be boron oxide or lithium oxynitride, but embodiments are not limited thereto. Any suitable material available as a solid electrolyte in the art may be used. The solid electrolyte may be formed on the negative electrode by, for example, sputtering.

For example, an organic electrolyte solution may be prepared. The organic electrolyte solution may be prepared by dissolving a lithium salt in an organic solvent.

Any suitable organic solvent available in the art may be used as an organic solvent. For example, the organic solvent may be selected from propylene carbonate, ethylene carbonate, fluoroethylene carbonate, butylene carbonate, dimethylcarbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, γ-butyrolactone, dioxolan, 4-methyl dioxolan, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethyl ether, methyl propionate, ethyl propionate, propyl propionate, and a combination thereof.

The lithium salt may be any suitable material available as a lithium salt in the art. For example, the lithium salt may be LiPF₆, LiBF₄, LiSbF₆, LiAsF₆, LiClO₄, LiCF₃SO₃,

Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where x and y are natural numbers), LiCl, Lil, or a mixture thereof.

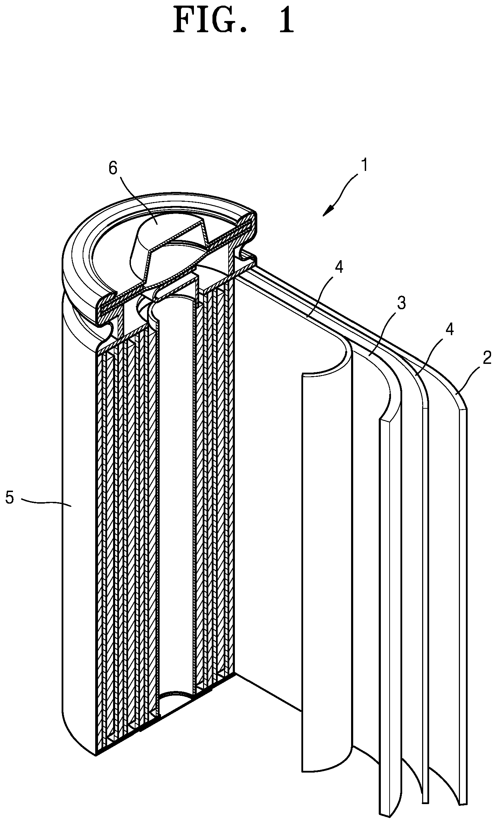

A lithium battery 1 may include a positive electrode 3, a negative electrode 2, and a separator 4, as shown in FIG. 1. The positive electrode 3, the negative electrode 2, and the separator 4 according to one or more embodiments may be wound or folded to form an electrode assembly. Then, the electrode assembly may be sealed in a battery case 5. Then, the battery case 5 is filled with an organic electrolyte solution and sealed with a cap assembly 6, thereby completing the manufacture of the lithium battery 1. The battery case 5 may be a cylindrical type, a rectangular type, or a thin-film type. In one or more embodiments, the lithium battery 1 may be a lithium ion battery. In one or more embodiments, the lithium battery 1 may be a lithium polymer battery.

The lithium battery 1 may have improved lifespan characteristics and high-rate characteristics, and thus may be used in an electric vehicle (EV), for example, in a hybrid vehicle such as a plug-in hybrid electric vehicle (PHEV).

Hereinafter example embodiments will be described in detail with reference to Examples and Comparative Examples. These examples are provided for illustrative purposes only and are not intended to limit the scope of the present inventive concept.

### (Preparation of separator)

### Example 1

As an organic particle, polyethylene wax (PE wax) with a spherical shape having an average particle diameter (D50) of 1.0 µm (melting point of 111 °C) was used. As a first binder, poly(acrylic acid-co-acrylamide-co-2-acrylamido-2-methylpropane sulfonic acid) sodium salt, which is a copolymer, was used. The poly(acrylic acid-co-acrylamide-co-2-acrylamido-2-methylpropane sulfonic acid) sodium salt was prepared according to Synthesis Example 7 of KR 10-2020-0032542. Here, a molar ratio of acrylate to acrylamide to 2-acrylamido-2-methylpropane sulfonic acid was 20:75:5. The melting point (Tₘ) of the copolymer was 170 °C. As a particle-type boehmite, BG611 (Anhui Estone Material Technology Co., Ltd.) having an average particle diameter in a range of 0.4 µm to 0.6 µm (D50 based on volume) was used. As a needle-shaped ceramic particle, Attagel 40 (BASF Co., a needle-shaped filler, an average particle size of 11 µm, and an aspect ratio of 50) was used. A total content of inorganic particles (the particle-type boehmite and the needle-shaped ceramic particle) was 25 parts by weight, based on 100 parts by weight of the organic particle (polyethylene(PE) wax), and a mixing weight ratio of the particle-type boehmite to the needle-shaped ceramic particle was 95:5.

Assuming that polyethylene wax is fully dissolved at a temperature of 150 °C, a ratio of the organic particle in the coating layer to the inorganic particle was considered as a porosity, and such that the porosity of the coating layer was 70 %, the organic particle (PE wax) of 76.4 parts by weight, the first binder (poly(acrylic acid-co-acrylamide-co-2-acrylamido-2-methylpropane sulfonic acid) sodium salt) of 4.5 parts by weight, and the inorganic particle (the particle-type boehmite and the needle-shaped ceramic particle) of 19.1 parts by weight were mixed together to prepare a slurry for forming a coating layer. Here, 20 wt% slurry was prepared by using deionized water as a solvent. The slurry for forming a first coating layer was gravure printed on a surface of a polyethylene porous substrate (SK Innovation, PE) having a thickness of 5.5 µm to form a first coating layer (shutdown layer) having a thickness of 4.0 µm on the surface of the porous substrate. Next, particle-type poly(2-ethylhexylacrylate) (BM-2570M available from Xeon) (having a D50 of 400 nm to 500 nm), a particle-type polyvinylidene fluoride filler (having a D50 of 200 nm), and water as a solvent were mixed, thereby preparing a slurry for forming an adhesive layer. The slurry for forming the adhesive layer was gravure printed on a surface of the porous substrate and on the first coating layer, followed by drying the slurry at a temperature of 75 °C. Thus, a first adhesive layer was formed on a surface of the porous substrate to have a thickness of 1 µm. Next, a second adhesive layer was formed on the first coating layer (shutdown layer) to have a thickness of 1 µm. Therefore, a separator having a total thickness of 11.5 µm was manufactured.

### Examples 2 to 5

Separators were manufactured in the same manner as in Example 1, except that a mixing weight ratio of the particle-type boehmite to the needle-shaped ceramic particle as inorganic particles in forming a slurry for forming a coating layer was changed as in Table 1.

### Example 6

A separator was manufactured in the same manner as in Example 1, except that an average size (major axis length) of the needle-shaped ceramic particle was 15 µm, and an aspect ratio of the needle-shaped ceramic particle was 30 in preparation of a slurry for forming a coating layer.

### Example 7

A separator was manufactured in the same manner as in Example 1, except that an aspect ratio of the needle-shaped ceramic particle was 80 in preparation of a slurry for forming a coating layer.

### Comparative Example 1

A separator was manufactured in the same manner as in Example 1, except that the needle-shaped ceramic particle was not used in preparation of a slurry for forming a coating layer.

### Comparative Example 2

A separator was manufactured in the same manner as in Example 1, except that the particle-shaped boehmite was not used in preparation of a slurry for forming a coating layer.

### Comparative Example 3

A separator was manufactured in the same manner as in Example 1, except that plate-like boehmite (a major axis length of 1 µm and an aspect ratio of 10) was used instead of the needle-shaped ceramic particle in preparation of a slurry for forming a coating layer. According to Comparative Example 3, when boehmite with a large particle size was used, the coating density was lowered as shown in Table 3 below.

**Table 1**

| Classification | Example 1 | Example 2 | Example 3 | Example 4 | Example 5 | Example 6 | Example 7 | Comparati ve Example 1 | Comparati ve Example 2 | Compara tive Example 3 |
|---|---|---|---|---|---|---|---|---|---|---|
| A mixing weight ratio of particle-type boehmite to needle-shaped ceramic particle | 95: 5 | 93:7 | 90:10 | 80:20 | 70:30 | 95:5 | 95:5 | 100:0 | 0:100 | - |
| Loading level (g/m²) | 3.15 | 3.29 | 3.50 | 4.20 | 4.90 | 3.10 | 3.00 | 2.80 | 9.80 | 2.48 |
| Coating density (g/cm³) | 0.79 | 0.82 | 0.88 | 1.05 | 1.23 | 0.78 | 0.75 | 0.70 | 2.45 | 0.62 |

In Table 1, the loading level refers to a loading level of the coating layer formed on the porous substrate, and the loading level was adjusted to control a thickness of the coating constantly to 4 µm. The coating density represents a coating density of the coating layer formed on the porous substrate.

### (Manufacture of lithium battery)

### Manufacture Example 1

First, a negative electrode was prepared as follows.

97 wt% of graphite particles having an average particle diameter of 25 µm, 1.5 wt% of styrene-butadiene rubber (SBR) binder, and 1.5 wt% of carboxymethyl cellulose (CMC) were mixed together to prepare a mixture. Subsequently, distilled water was added to the mixture, followed by stirring with a mechanical stirrer for 60 minutes, to thereby prepare a negative active material slurry. The negative active material slurry was coated on a copper current collector having a thickness of 10 µm using a doctor blade. By drying at a temperature of 100 °C using a hot-air dryer for 0.5 hours and vacuum-drying at a temperature of 120 °C for 4 hours and roll-pressing, a negative electrode plate was prepared.

A positive electrode was prepared as follows.

97 wt% of LiCoO₂, 1.5 wt% of carbon black powder as a conductive agent, and 1.5 wt% of polyvinylidene fluoride (PVdF) were mixed, and the mixture was added to N-methyl-2-pyrrolidone solvent, followed by stirring with a mechanical stirrer for 30 minutes, to thereby prepare a positive active material slurry. The positive active material slurry was coated on an aluminum current collector having a thickness of 20 µm using a doctor blade. By drying at a temperature of 100 °C using a hot-air dryer for 0.5 hours and vacuum-drying at a temperature of 120 °C for 4 hours and roll-pressing, a positive electrode plate was prepared.

### (Electrode assembly)

The separator prepared in Example 1 was disposed between the positive electrode plate and the negative electrode plate prepared above, and then wound up to prepare an electrode assembly jelly roll. After inserting the jelly roll into a pouch and injecting the electrolyte thereto, the pouch was vacuum sealed.

An electrolytic solution, in which 1.3 M of LiPF₆ was dissolved in a mixing solvent of ethylene carbonate (EC)/ethylmethyl carbonate (EMC)/diethyl carbonate (DEC) at a volume ratio of 3:5:2, was used.

The jelly roll inserted in the pouch was pre-charged up to 50 % of the SOC while thermally softening the jelly roll at a temperature of 70° C. for 1 hour while applying a pressure of 250 kgf/cm²

The jelly roll was heat-pressed at a temperature of 85 °C for 180 seconds while applying a pressure of 200 kgf/cm². During the hot rolling process, as the binder transitioned from a gel state to a sol state, a binding force was generated between the positive electrode/negative electrode and the separator.

Subsequently, the jelly roll was cold-pressed at a temperature of 22 °C to 23 °C for 90 seconds while applying a pressure of 200 kgf/cm². During the cold rolling process, the binder was transitioned from a sol state to a gel state.

Then, the pouch was degassed, and while applying a pressure of 200 kgf/cm² to the jelly roll, the battery was charged with a constant current at a temperature of 45 °C for 1 hour at a current of 0.2 C rate until the voltage reached 4.3 V, and then, the battery was charged with a constant voltage until the current reached 0.05 C rate while maintaining 4.3 V. Afterward, the battery was discharged with a constant current of 0.2 C rate until the voltage reached 3.0 V. This cycle was repeated 5 times to perform a formation process.

### Comparative Manufacture Examples 1 and 2

Lithium batteries were respectively manufactured in the same manner as in Manufacture Example 1, except that the separators manufactured in Comparative Examples 1 and 2 were used instead of the separator of Example 1.

### Evaluation Example 1: Air permeability

Air permeability per unit thickness of the separators of Examples 1 to 7 and Comparative Examples 1 to 3 were measured by using an air permeation tester (Asahi Seiko OKEN Type Air Permeation Tester: EGO1-55-1MR) according to the following method.

After preparing 10 specimens cut at 10 different points to a size that may fit a circle with a diameter of 1 inch, ASAHI SEIKO OKEN TYPE Air Permeation Tester EG01-55-1MR (Asahi Seiko) was used to measure the passage time of 100 cc of air in each of the specimens. After measuring the time five times, the average value was calculated to measure air permeability.

### [Conditions for setting air permeability measuring device]

Measurement pressure: 0.05 mPa, cylinder pressure: 2.5 kg/cm², set time: 10 seconds A 1 m specimen was measured at least 10 times at 10 cm intervals, and the average value of the data was recorded in Table 2.

### Evaluation Example 2: Ion conductivity

The ion conductivity of the separators of Examples 1 to 7 and Comparative Examples 1 to 3 at a temperature of 25 °C was measured by using an EIS measurement device. The results thereof are shown in Tables 2 and 3.

**Table 2**

| Unit | | Example 1 | Example 2 | Example 3 | Example 4 | Example 5 | Example 6 | Example 7 |
|---|---|---|---|---|---|---|---|---|
| A mixing weight ratio of particle-type boehmite to needle-shaped ceramic particle | | 95:5 | 93: 7 | 90:10 | 80:20 | 70:30 | 95:5 | 95:5 |
| Phy sical prop erty | Coating thickness (µm) | 4 | 4 | 4 | 4 | 4 | 4 | 4 |
| | Loading level (g/m²) | 3.15 | 3.29 | 3.50 | 4.20 | 4.90 | 3.10 | 3.00 |
| | Coating density (g/cm³) | 0.79 | 0.82 | 0.88 | 1.05 | 1.23 | 0.78 | 0.75 |
| | Air permeability (s/100cc) | 144 (△32) | 144 (△32) | 146 (△34) | 149 (△37) | 153 (△41) | 160 (△48) | 163 (△51) |
| | Ion conductivity (mS/cm) | 0.61 | 0.63 | 0.65 | 0.73 | 0.81 | 0.60 | 0.58 |

**Table 3**

| Unit | | Comparative Example 1 | Comparative Example 2 | Comparative Example 3 |
|---|---|---|---|---|
| A mixing weight ratio of particle-type boehmite to needle-shaped ceramic particle | | 100:0 | 0:100 | - |
| | Coating thickness (µm) | 4 | 4 | 4 |
| Physical property | Loading level (g/m²) | 2.80 | 9.80 | 2.48 |
| | Coating density (g/cm³) | 0.70 | 2.45 | 0.62 |
| | Air permeability (s/100cc) | 142 (△30) | 177 (△65) | 181 (△69) |
| | Ion conductivity (mS/cm) | 0.57 | 1.38 | 0.50 |

In Tables 2 and 3, the coating thickness refers to a coating thickness of the first coating layer (shutdown layer) formed on the porous substrate, the loading level refers to a loading level of the first coating layer formed on the porous substrate, and the loading level was adjusted to control a thickness of the coating constantly to 4 µm.

As shown in Tables 2 and 3, the separators of Examples 1 to 7 were each found to have excellent air permeability, improved coating density, as compared with the separators of Comparative Examples 1 and 3, and significant ion conductivity increasing effect. The separator of Comparative Example 2 included the coating layer (shutdown layer) containing the needle-shaped ceramic particle. Thus, the coating layer had increased density and increased surface area of a filler, thereby improving electrolytic solution impregnation and ion conductivity. However, the separator of Comparative Example 2 had deteriorated heat resistance and durability. Thus, the permeation characteristics of Evaluation Example 3 were poor, and thus, the practical application of the separator was difficult.

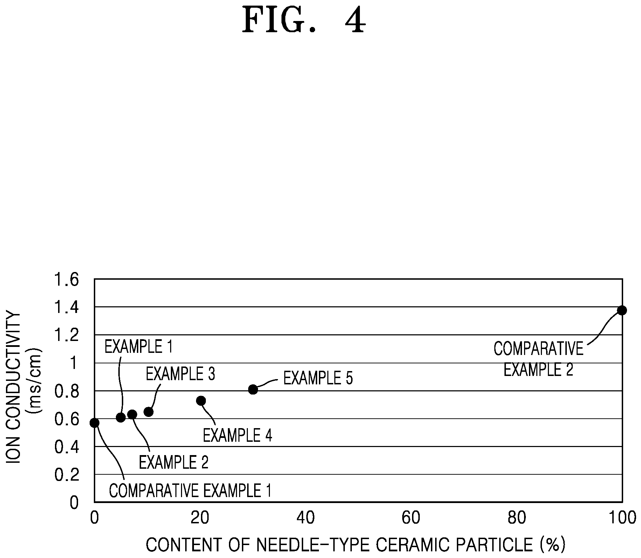

In addition, in the separator of Examples 1 to 5 and Comparative Examples 1 and 2, the change in the ion conductivity of the separator according to the change in the content of the needle-shaped ceramic particle during the manufacture of the first coating layer was investigated and shown in FIG. 4.

Referring to FIG. 4, it was found that the ion conductivity of the separator was improved when the content of the needle-shaped ceramic particle increased.

### Evaluation Example 3: Measurement of permeation characteristics

The jelly rolls were taken out from the pouches of Manufacture Example 1 and Comparative Manufacture Examples 1 and 2 that had undergone the formation process, each of the separator was separated, and permeation characteristics were evaluated. The results thereof are shown in Table 4. After performing a nail test on each separator, a degree and probability of occurrence of abnormalities were evaluated according to the observed phenomenon. L4-3 and L6 were evaluated as abnormality.

**Table 4**

| Classification | L3 (no smok e) | L4-1 (smoke generated after bending) | L4-3 (smoke with spark, for 2 or more seconds) | L6 (broken) | Total | Possibility of not causing a problem (%) |
|---|---|---|---|---|---|---|
| Manufacture Example 1 | 4 | 5 | 1 | - | 10 | 90 % |
| Comparative Manufacture Example 1 | - | - | - | 9 | 9 | 0% |
| Comparative Manufacture Example 2 | - | 1 | 8 | 1 | 10 | 10% |

As shown in Table 4, the separator manufactured according to Manufacture Example 1 had significantly improved permeation characteristics, as compared with the separators of Comparative Manufacture Examples 1 and 2.

### Evaluation Example 4: Scanning electron microscope (SEM) analysis

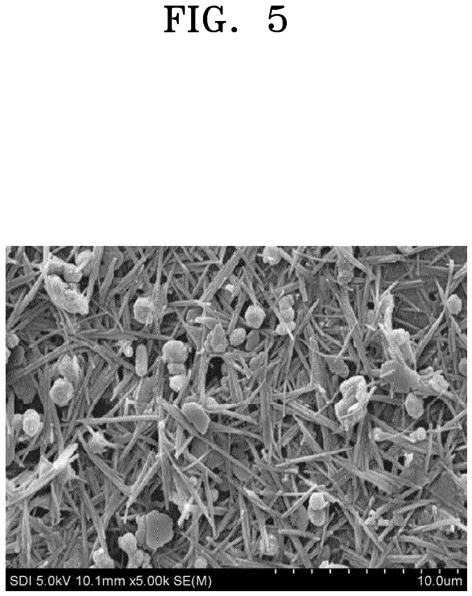

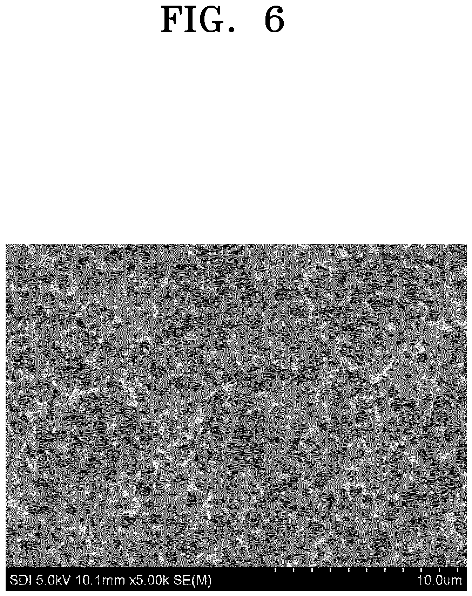

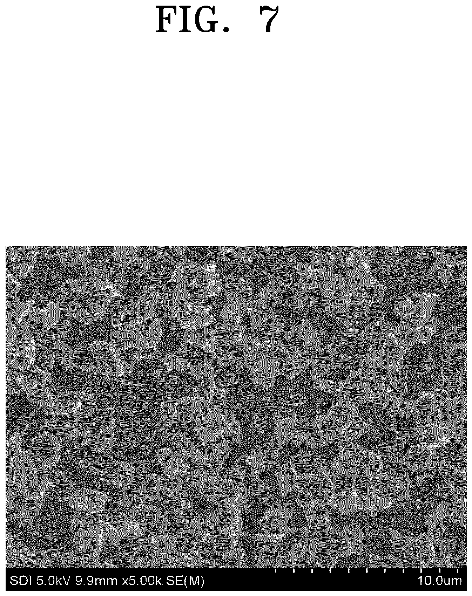

To verify whether the separator prepared in Example 1 maintained a network structure upon exposure to a high temperature, the separator was left at a high temperature of 120 °C for 1 hour, and then the separator was observed with a scanning electron microscope (SEM). The SEM observation results before and after leaving at a high temperature are shown in FIGS. 5 to 7. FIG. 5 is an SEM image of the separator prepared in Example 1 before leaving at a high temperature. FIG. 6 is an SEM image of the separator prepared in Example 1 shown in FIG. 5 after leaving at a high temperature. FIG. 7 is an SEM image of the separator prepared in Comparative Example 1 after leaving at a high temperature.

As shown in FIG. 5, it may be seen that a coating layer (i.e., a shutdown layer) containing organic particles, inorganic particles, or the like is formed in the separator manufactured in Example 1. and as shown in FIG. 6, in the separator prepared in Example 1, after leaving the separator at a high temperature, the organic particles dissolved in the coating layer, and the shape of the shutdown particles were maintained, thereby maintaining the matrix of the network structure. As the coating layer maintains a network structure, thermal stability is improved, and air permeability is greatly increased.

FIG. 7 is an SEM image of the separator prepared in Comparative Example 1, which was observed after leaving the separator at a high temperature under the same conditions as the separator in Example 1. It was found that, in the separator prepared in Comparative Example 1, not only the polyethylene particles melted, but also the low-melting binder melted, after leaving the separator at a high temperature. Thus, the coating layer was not maintained.

As apparent from the foregoing description, the separator according to an aspect may maintain a coating layer of a network structure even at a high temperature. Thus, when shutdown occurs, a rapid increase in temperature and calorific value may be delayed. Accordingly, a lithium battery may have improved stability at a high temperature.

## Claims

1. A separator (4) for lithium batteries (1) comprising:
a porous substrate (10); and
a first coating layer (11) disposed on a surface of the porous substrate (10), the first coating layer (11comprising an organic particle having a melting point (Tₘ) in a range of 100 °C to 130 °C, a particle-type boehmite, a needle-shaped ceramic particle, and a first binder;
a first adhesive layer (12) disposed on another surface of the porous substrate (10), the first adhesive layer (12) having a glass transition temperature (Tg) of 50 °C or higher, and comprising a particle-type second binder; and
a second adhesive layer (13) disposed on the first coating layer (11), the second adhesive layer (13) having a glass transition temperature (Tg) of 50 °C or higher, and comprising a particle-type second binder, wherein the melting point and the glass transition temperature are measured according to the description.

2. The separator of claim 1, wherein a content of the needle-shaped ceramic particle is in a range of 1 part to 30 parts by weight, based on 100 parts by weight of a total weight of the particle-type boehmite and the needle-shaped ceramic particle.

3. The separator of claim 1 or 2, wherein the needle-shaped ceramic particle is at least one selected from alumina (Al₂O₃), boehmite, BaSO₄, MgO, Mg(OH)₂, clay, SiO₂, TiO₂, ZnO, CaO, attapulgite, and 10SiO₂-2Al₂O₃-Fe₂O₃-2MgO.

4. The separator of any one of the preceding claims, wherein an average particle size of the needle-shaped ceramic particle is in a range of 1 micrometer (µm) to 20 µm, and an aspect ratio of the needle-shaped ceramic particle is in a range of 2 to 100, wherein the average particle size is measured according to the description.

5. The separator of any one of the preceding claims, wherein an average particle diameter of the particle-type boehmite is in a range of 0.1 µm to 1.0 µm, wherein the average particle diameter is measured according to the description.

6. The separator of any one of the preceding claims, further comprising a second coating layer (11') between the porous substrate (10) and the first adhesive layer (12), the seond coating layer (11')comprising an organic particle having a melting point (Tₘ) in a range of 100 °C to 130 °C, a particle-type boehmite, a needle-shaped ceramic particle, and a second binder, wherein the melting point is measured according to he description.

7. The separator of any one of the preceding claims, wherein the organic particle is at least one selected from polyethylene (PE) wax, polypropylene (PP) wax, polystyrene (PS), polyvinylidene fluoride (PVDF), polymethyl methacrylate (PMMA), an acrylate-based compound, polyacrylonitrile (PAN), and an azodicarbonamide-based compound.

8. The separator of claim 7, wherein the organic particle is polyethylene (PE) wax.

9. The separator of any one of the preceding claims, wherein the first binder comprises at least one of a sulfonate-based compound, an acrylamide-based compound, a (meth)acryl-based compound, and an acrylonitrile-based compound or a copolymer thereof, preferably, wherein the first binder is poly(acrylic acid-co-acrylamide-co-2-acrylamido-2-methylpropane sulfonic acid)sodium salt.

10. The separator of any one of the preceding claims, wherein a total content of the particle-type boehmite and the needle-shaped ceramic particle is in a range of 20 to 50 parts by weight, based on 100 parts by weight of the organic particle.

11. The separator of any one of the preceding claims, wherein a thickness of the first coating layer (11) is in a range of 0.1 µm to 5.0 µm.

12. The separator of any one of the preceding claims, wherein a thickness of each of the first adhesive layer (12) and the second adhesive layer (13) is in a range of 0.1 µm to 5 µm.

13. The separator of any one of the preceding claims, wherein an average particle diameter of the particle-type second binder in the first adhesive layer (12) and second adhesive layer (13) is in a range of 100 nm to 800 nm, wherein the average particle diameter is measured according to the description.

14. The separator of any one of the preceding claims, wherein the particle-type second binder comprises at least one selected from acryl-based resin, polyvinylidene fluoride, polyvinylidene fluoride-hexafluoropropylene copolymer, polyvinylidene fluoride-trichloroethylene copolymer, polyvinylidene fluoride-chlorotrifluoroethylene copolymer, polymethyl methacrylate, polyacrylonitrile, polyvinyl pyrrolidone, polyvinyl acetate, ethylene vinyl acetate copolymer, polyethylene oxide, cellulose acetate, cellulose acetate butylate, cellulose acetate propionate, cyanoethyl Pullulan, cyanoethyl polyvinyl alcohol, cyanoethyl cellulose, cyanoethyl sucrose, pullulan, carboxyl methyl cellulose, acrylonitrile styrene butadiene copolymer, and polyimide.

15. A lithium battery (1) comprising: a positive electrode (3); a negative electrode (2); and a separator (4) according to any one of preceding claims.

## Patentansprüche

1. Separator (4) für Lithiumbatterien (1), der Folgendes umfasst:
ein poröses Substrat (10); und
eine erste Beschichtungsschicht (11), die auf einer Oberfläche des porösen Substrats (10) angeordnet ist, wobei die erste Beschichtungsschicht (11) ein organisches Teilchen mit einem Schmelzpunkt (Tₘ) in einem Bereich von 100 °C bis 130 °C, einen teilchenartiges Böhmit, ein nadelförmiges Keramikteilchen und ein erstes Bindemittel umfasst;
eine erste Klebeschicht (12), die auf einer anderen Oberfläche des porösen Substrats (10) angeordnet ist, wobei die erste Klebeschicht (12) eine Glasübergangstemperatur (Tg) von 50 °C oder höher aufweist und ein teilchenartiges zweites Bindemittel umfasst; und
eine zweite Klebeschicht (13), die auf der ersten Beschichtungsschicht (11) angeordnet ist, wobei die zweite Klebeschicht (13) eine Glasübergangstemperatur (Tg) von 50 °C oder höher aufweist und ein teilchenartiges zweites Bindemittel umfasst, wobei der Schmelzpunkt und die Glasübergangstemperatur gemäß der Beschreibung gemessen werden.

2. Separator nach Anspruch 1, wobei der Gehalt an nadelförmigen Keramikteilchen im Bereich von 1 bis 30 Gewichtsteilen liegt, bezogen auf 100 Gewichtsteile des Gesamtgewichts des teilchenartigen Böhmits und des nadelförmigen Keramikteilchens.

3. Separator nach Anspruch 1 oder 2, wobei das nadelförmige Keramikteilchen mindestens eines ist, das ausgewählt ist aus Aluminiumoxid (Al₂O₃), Böhmit, BaSO₄, MgO, Mg(OH)₂ , Ton, SiO₂, TiO₂, ZnO, CaO, Attapulgit und 10SiO₂-2Al₂O₃-Fe₂O₃-2MgO.

4. Separator nach einem der vorhergehenden Ansprüche, wobei die durchschnittliche Teilchengröße des nadelförmigen Keramikteilchens im Bereich von 1 Mikrometer (µm) bis 20 µm liegt und das Seitenverhältnis des nadelförmigen Keramikteilchens im Bereich von 2 bis 100 liegt, wobei die durchschnittliche Teilchengröße gemäß der Beschreibung gemessen wird.

5. Separator nach einem der vorhergehenden Ansprüche, wobei der durchschnittliche Teilchendurchmesser des teilchenartigen Böhmits in einem Bereich von 0,1 µm bis 1,0 µm liegt, wobei der durchschnittliche Teilchendurchmesser gemäß der Beschreibung gemessen wird.

6. Separator nach einem der vorhergehenden Ansprüche, der ferner eine zweite Beschichtungsschicht (11') zwischen dem porösen Substrat (10) und der ersten Klebeschicht (12) umfasst, wobei die zweite Beschichtungsschicht (11') ein organisches Teilchen mit einem Schmelzpunkt (Tₘ) im Bereich von 100 °C bis 130 °C, ein teilchenartiges Böhmit, ein nadelförmiges Keramikteilchen und ein zweites Bindemittel umfasst, wobei der Schmelzpunkt gemäß der Beschreibung gemessen wird.

7. Separator nach einem der vorhergehenden Ansprüche, wobei das organische Teilchen mindestens eines ist, das aus Polyethylen-(PE)-Wachs, Polypropylen-(PP)-Wachs, Polystyrol (PS), Polyvinylidenfluorid (PVDF), Polymethylmethacrylat (PMMA), einer Verbindung auf Acrylatbasis, Polyacrylnitril (PAN) und einer Verbindung auf Azodicarbonamidbasis ausgewählt ist.

8. Separator nach Anspruch 7, wobei das organische Teilchen Polyethylen-(PE)-Wachs ist.

9. Separator nach einem der vorhergehenden Ansprüche, wobei das erste Bindemittel mindestens eine Verbindung auf Sulfonatbasis, eine Verbindung auf Acrylamidbasis, eine Verbindung auf (Meth)acrylbasis und eine Verbindung auf Acrylnitrilbasis oder ein Copolymer davon umfasst, wobei das erste Bindemittel vorzugsweise ein Poly(acrylsäure-co-acrylamid-co-2-acrylamido-2-methylpropansulfonsäure)-Natriumsalz ist.

10. Separator nach einem der vorhergehenden Ansprüche, wobei der Gesamtgehalt des teilchenartigen Böhmits und des nadelförmigen Keramikteilchens in einem Bereich von 20 bis 50 Gewichtsteilen, bezogen auf 100 Gewichtsteile des organischen Teilchens, liegt.

11. Separator nach einem der vorhergehenden Ansprüche, wobei die Dicke der ersten Beschichtungsschicht (11) im Bereich von 0,1 µm bis 5,0 µm liegt.

12. Separator nach einem der vorhergehenden Ansprüche, wobei die Dicke der ersten Klebeschicht (12) und der zweiten Klebeschicht (13) jeweils in einem Bereich von 0,1 µm bis 5 µm liegt.

13. Separator nach einem der vorhergehenden Ansprüche, wobei der durchschnittliche Teilchendurchmesser des teilchenartigen zweiten Bindemittels in der ersten Klebeschicht (12) und der zweiten Klebeschicht (13) in einem Bereich von 100 nm bis 800 nm liegt, wobei der durchschnittliche Teilchendurchmesser gemäß der Beschreibung gemessen wird.

14. Separator nach einem der vorhergehenden Ansprüche, wobei das zweite teilchenartige Bindemittel v mindestens eines umfasst, das ausgewählt ist aus Harz auf Acrylbasis, Polyvinylidenfluorid, Polyvinylidenfluorid-Hexafluorpropylen-Copolymer, Polyvinylidenfluorid-Trichlorethylen-Copolymer, Polyvinylidenfluorid-Chlortrifluorethylen-Copolymer, Polymethylmethacrylat, Polyacrylnitril, Polyvinylpyrrolidon, Polyvinylacetat, Ethylen-Vinylacetat-Copolymer, Polyethylenoxid, Celluloseacetat, Celluloseacetatbutylat, Celluloseacetatpropionat, Cyanoethyl-Pullulan, Cyanoethyl-Polyvinylalkohol, Cyanoethyl-Cellulose, Cyanoethyl-Sucrose, Pullulan, Carboxylmethylcellulose, Acrylnitril-Styrol-Butadien-Copolymer und Polyimid.

15. Lithiumbatterie (1), umfassend: eine positiven Elektrode (3); eine negative Elektrode (2); und einen Separator (4) nach einem der vorhergehenden Ansprüche.

## Revendications

1. Séparateur (4) pour des batteries au lithium (1) comprenant :
un substrat poreux (10) ; et
une première couche de revêtement (11) disposée sur une surface du substrat poreux (10), la première couche de revêtement (11) comprenant une particule organique ayant un point de fusion (Tₘ) dans une plage de 100 °C à 130 °C, une boehmite de type particule, une particule de céramique en forme d'aiguille, et un premier liant ;
une première couche adhésive (12) disposée sur une autre surface du substrat poreux (10), la première couche adhésive (12) ayant une température de transition vitreuse (Tg) de 50 °C ou plus, et comprenant un deuxième liant de type particule ; et
une deuxième couche adhésive (13) disposée sur la première couche de revêtement (11), la deuxième couche adhésive (13) ayant une température de transition vitreuse (Tg) de 50 °C ou plus, et comprenant un deuxième liant de type particule, dans lequel le point de fusion et la température de transition vitreuse sont mesurés selon la description.

2. Séparateur selon la revendication 1, dans lequel une teneur de la particule de céramique en forme d'aiguille est dans une plage de 1 partie à 30 parties en poids, par rapport à 100 parties en poids d'un poids total de la boehmite de type particule et de la particule de céramique en forme d'aiguille.

3. Séparateur selon la revendication 1 ou 2, dans lequel la particule de céramique en forme d'aiguille est au moins l'un choisi parmi l'alumine (Al₂O₃), la boehmite, BaSO₄, MgO, Mg(OH)₂, l'argile, SiO₂, TiO₂, ZnO, CaO, l'attapulgite, et 10SiO₂-2Al₂O₃-Fe₂O₃-2MgO.

4. Séparateur selon l'une quelconque des revendications précédentes, dans lequel une dimension de particule moyenne de la particule de céramique en forme d'aiguille est dans une plage de 1 micromètre (µm) à 20 µm, et un rapport d'aspect de la particule de céramique en forme d'aiguille est dans une plage de 2 à 100, dans lequel la dimension de particule moyenne est mesurée selon la description.

5. Séparateur selon l'une quelconque des revendications précédentes, dans lequel un diamètre de particule moyen de la boehmite de type particule est dans une plage de 0,1 µm à 1,0 µm, dans lequel le diamètre de particule moyen est mesuré selon la description.

6. Séparateur selon l'une quelconque des revendications précédentes, comprenant en outre une deuxième couche de revêtement (11') entre le substrat poreux (10) et la première couche adhésive (12), la deuxième couche de revêtement (11') comprenant une particule organique ayant un point de fusion (Tₘ) dans une plage de 100 °C à 130 °C, une boehmite de type particule, une particule de céramique en forme d'aiguille, et un deuxième liant, dans lequel le point de fusion est mesuré selon la description.

7. Séparateur selon l'une quelconque des revendications précédentes, dans lequel la particule organique est au moins l'un choisi parmi la cire de polyéthylène (PE), la cire de polypropylène (PP), le polystyrène (PS), le polyfluorure de vinylidène (PVDF), le polyméthacrylate de méthyle (PMMA), un composé à base d'acrylate, le polyacrylonitrile (PAN), et un composé à base d'azodicarbonamide.

8. Séparateur selon la revendication 7, dans lequel la particule organique est de la cire de polyéthylène (PE).

9. Séparateur selon l'une quelconque des revendications précédentes, dans lequel le premier liant comprend au moins l'un d'un composé à base de sulfonate, d'un composé à base d'acrylamide, d'un composé à base de (méth)acryl, et d'un composé à base d'acrylonitrile ou d'un copolymère de ceux-ci, de préférence, dans lequel le premier liant est un sel de sodium de poly(acide acrylique-co-acrylamide-co-acide 2-acrylamido-2-méthylpropane sulfonique).

10. Séparateur selon l'une quelconque des revendications précédentes, dans lequel une teneur totale de la boehmite de type particule et de la particule de céramique en forme d'aiguille est dans une plage de 20 à 50 parties en poids, par rapport à 100 parties en poids de la particule organique.

11. Séparateur selon l'une quelconque des revendications précédentes, dans lequel une épaisseur de la première couche de revêtement (11) est dans une plage de 0,1 µm à 5,0 µm.

12. Séparateur selon l'une quelconque des revendications précédentes, dans lequel une épaisseur de la première couche adhésive (12) et de la deuxième couche adhésive (13) est dans une plage de 0,1 µm à 5 µm.

13. Séparateur selon l'une quelconque des revendications précédentes, dans lequel un diamètre de particule moyen du deuxième liant de type particule dans la première couche adhésive (12) et la deuxième couche adhésive (13) est dans une plage de 100 nm à 800 nm, dans lequel le diamètre de particule moyen est mesuré selon la description.

14. Séparateur selon l'une quelconque des revendications précédentes, dans lequel le deuxième liant de type particule comprend au moins l'un choisi parmi une résine acrylique, un polyfluorure de vinylidène, un copolymère de polyfluorure de vinylidène et d'hexafluoropropylène, un copolymère de polyfluorure de vinylidène et de trichloroéthylène, un copolymère de polyfluorure de vinylidène et de chlorotrifluoroéthylène, un polymétacrylate de méthyle, un polyacrylonitrile, un polyvinylpyrrolidone, un polyacétate de vinyle, un copolymère d'acétate de vinyle et d'éthylène, un oxyde de polyéthylène, un acétate de cellulose, un acétobutylate de cellulose, un acétopropionate de cellulose, un pullulan cyanoéthylé, un alcool polyvinylique cyanoéthylé, une cellulose cyanoéthylée, un saccharose cyanoéthylé, une carboxyméthylcellulose, un copolymère d'acrylonitrile styrène butadiène, et un polyimide.

15. Batterie au lithium (1) comprenant : une électrode positive (3) ; une électrode négative (2) ; et un séparateur (4) selon l'une quelconque des revendications précédentes.
